(19) Europäisches Patentamt / European Patent Office / Office européen des brevets

(11) **EP 4 458 193 A1**

(12) **EUROPEAN PATENT APPLICATION**
published in accordance with Art. 153(4) EPC

(43) Date of publication:
**06.11.2024 Bulletin 2024/45**

(21) Application number: **22933322.4**

(22) Date of filing: **23.03.2022**

(51) International Patent Classification (IPC):
*A24F 40/57* (2020.01)     *A24F 40/60* (2020.01)

(52) Cooperative Patent Classification (CPC):
**A24F 40/57; A24F 40/60**

(86) International application number:
**PCT/JP2022/013534**

(87) International publication number:
**WO 2023/181178 (28.09.2023 Gazette 2023/39)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Japan Tobacco Inc.
Tokyo 105-6927 (JP)**

(72) Inventor: **YAMADA, Manabu
Tokyo 130-8603 (JP)**

(74) Representative: **Hoffmann Eitle
Patent- und Rechtsanwälte PartmbB
Arabellastraße 30
81925 München (DE)**

(54) **INFORMATION PROCESSING DEVICE, INFORMATION PROCESSING METHOD, AND PROGRAM**

(57)     [Problem] To provide a customization mechanism with which it is possible to easily realize a flavor desired by a user.

[Solution] An information processing device used by an inhalation device for heating an aerosol source contained in a substrate on the basis of control information stipulating a parameter relating to a temperature to which the aerosol source is to be heated to generate an aerosol, the information processing device comprising a control unit for controlling a customization process including generating a display image displaying an operation subject for setting the parameter included in the control information, and changing the parameter included in the control information in accordance with a user operation on the operation subject displayed in the generated display image. When repeatedly executing the customization process, the control unit sets a method for changing the parameter in a subsequent customization process on the basis of change content for the parameter in the previous customization process.

FIG. 1

EP 4 458 193 A1

## Description

Technical Field

The present invention relates to an information processing device, an information processing method, and a program.

Background Art

Inhaler devices designed to generate material to be inhaled by users, such as electronic cigarettes and nebulizers, are widely used. For example, an inhaler device generates an aerosol containing a flavor component by using a substrate containing, for example, an aerosol source used to generate an aerosol and a flavor source used to impart the flavor component to the generated aerosol. The user inhales the aerosol containing the flavor component, generated by the inhaler device to taste the flavor. The user's action of inhaling aerosol is also referred to as puff or puff action in the following.

Different users have varying preferences for the flavor (hereinafter also called smoke taste) experienced during puffing. For this reason, it is preferable that the temperature used to heat the aerosol source, which directly influences the smoke taste, is customizable by users. Patent Literature 1, listed below, discloses a technology that enables users to customize the temperature used to heat the aerosol source.

Citation List

Patent Literature

Patent Literature 1: WO 2019/104227 A1

Summary of Invention

Technical Problem

With the technology disclosed in Patent Literature 1, customization can sometimes be difficult to perform as desired by users.

The present invention has been made in consideration of the problem described above, and an object of the present invention is to provide a customization mechanism that easily achieves the smoke tastes desired by users.

Solution to Problem

To address the problem described above, in one aspect of the present invention, an information processing device includes a controller configured to control a customization operation including generating a display image that displays an operational object, the operational object being configured to set a parameter related to a temperature to which an aerosol source contained in a substrate is to be heated, the parameter being specified and included in control information, the parameter being configured to be used by an inhaler device that generates an aerosol by heating the aerosol source in accordance with the control information and changing the parameter included in the control information, based on a user operation performed with the operational object displayed in the generated display image. The controller is configured to, when repeatedly performing the customization operation, set a method for changing the parameter for the customization operation to be subsequently performed, based on an adjustment pattern of the parameter in the customization operation previously performed.

The display image may include an axis on which the operational object is movably positioned. The controller may be configured to change the parameter based on a position of the operational object on the axis during the customization operation and set a correspondence relation for the customization operation to be subsequently performed between the position on the axis and a value to be set as the parameter when the operational object is located at the position, based on the adjustment pattern of the parameter in the customization operation previously performed.

The controller may be configured to, during the customization operation, set the parameter to a specific value obtained by adding or subtracting a second value that corresponds to a difference between a reference position on the axis and the position of the operational object to or from a first value that corresponds to the reference position and set the first value for the customization operation to be subsequently performed, based on the parameter that is set for the customization operation previously performed.

The controller may be configured to set the first value for the customization operation to be subsequently performed to the parameter that is set for the customization operation previously performed.

The controller may be configured to, during the customization operation, set the parameter to a specific value obtained by adding or subtracting a second value that corresponds to a distance between a reference position on the axis and the position of the operational object to or from a first value that corresponds to the reference position and set the second value per unit distance for the customization operation to be subsequently performed, based on a change amount of the parameter in the customization operation previously performed.

The controller may be configured to increase the second value per unit distance for the customization operation to be subsequently performed as the change amount of the parameter in the customization operation previously performed increases, and to decrease the second value per unit distance for the customization operation to be subsequently performed as the change amount of the parameter during the customization operation previously performed decreases.

The controller may be configured to set the second value per unit distance for the customization operation to be subsequently performed such that an integer multiple of the second value per unit distance for the customization operation to be subsequently performed matches the change amount of the parameter in the customization operation previously performed.

The initial position of the operational object in the display image may be the reference position on the axis.

The reference position may be the center of the axis.

The axis may be one of a plurality of axes that are included in the display image and each provided with the operational object movably positioned, and the plurality of axes may respectively correspond to a plurality of puff timings. The controller may be configured to set the parameter for each puff timing based on the position of the operational object on each axis.

The controller may be configured to display a portion of the axis corresponding to a value to be set as the parameter in a differ manner from a portion of the axis corresponding to a value not to be set as the parameter in the display image.

To address the problem described above, in another aspect of the present invention, an information processing method includes controlling a customization operation including generating a display image that displays an operational object, the operational object being configured to set a parameter related to a temperature to which an aerosol source contained in a substrate is to be heated, the parameter being specified and included in control information, the parameter being configured to be used by an inhaler device that generates an aerosol by heating the aerosol source in accordance with the control information and changing the parameter included in control information, based on a user operation performed with the operational object displayed in the generated display image. The controlling the customization operation includes, when repeatedly performing the customization operation, setting a method for changing the parameter for the customization operation to be subsequently performed, based on an adjustment pattern of the parameter in the customization operation previously performed.

To address the problem described above, in another aspect of the present invention, a program is configured to cause a computer to operate as a controller that controls a customization operation including generating a display image that displays an operational object, the operational object being configured to set a parameter related to a temperature to which an aerosol source contained in a substrate is to be heated, the parameter being specified and included in control information, the parameter being configured to be used by an inhaler device that generates an aerosol by heating the aerosol source in accordance with the control information and changing the parameter included in control information, based on a user operation performed with the operational object displayed in the generated display image. The controller is configured to, when repeatedly performing the customization operation, set a method for changing the parameter for the customization operation to be subsequently performed, based on an adjustment pattern of the parameter in the customization operation previously performed.

Advantageous Effects of Invention

As described above, the present invention provides a customization mechanism that easily achieves the smoke tastes desired by users.

Brief Description of Drawings

[Fig. 1] Fig. 1 illustrates a configuration example of a system according to an embodiment.
[Fig. 2] Fig. 2 is a schematic diagram of a configuration example of an inhaler device according to the embodiment.
[Fig. 3] Fig. 3 is a block diagram illustrating a configuration example of a terminal device according to the embodiment.
[Fig. 4] Fig. 4 is a graph schematically illustrating an exemplary heating profile.
[Fig. 5] Fig. 5 illustrates an exemplary customization screen according to the embodiment.
[Fig. 6] Fig. 6 illustrates the correspondence relation between the positions on an axis and the temperatures for the subsequent customization operation when the target temperature is raised in the previous customization operation.
[Fig. 7] Fig. 7 illustrates the correspondence relation between the positions on the axis and the temperatures for the subsequent customization operation when the target temperature is lowered in the previous customization operation.
[Fig. 8] Fig. 8 illustrates a first specific example of updating the correspondence relation between the graduation marks on the axis 32 corresponding to one puff timing and temperatures.
[Fig. 9] Fig. 9 illustrates a second specific example of updating the correspondence relation between the graduation marks on the axis 32 corresponding to one puff timing and temperatures.
[Fig. 10] Fig. 10 illustrates a third specific example of updating the correspondence relation between the graduation marks on the axis 32 corresponding to one puff timing and temperatures.
[Fig. 11] Fig. 11 illustrates a fourth specific example of updating the correspondence relation between the graduation marks on the axis 32 corresponding to one puff timing and temperatures.
[Fig. 12] Fig. 12 is a flowchart illustrating an exemplary process flow performed in the terminal device according to the embodiment.

[Fig. 13] Fig. 13 illustrates the target temperature for a second puff timing.

Description of Embodiments

Hereinafter, a preferred embodiment of the present invention will be described in detail with reference to the accompanying drawings. In this specification and accompanying drawings, structural elements having substantially the same functional configuration features are denoted by the same reference numerals, and redundant descriptions thereof will not be repeated.

<1. Configuration example>

(1) System configuration example

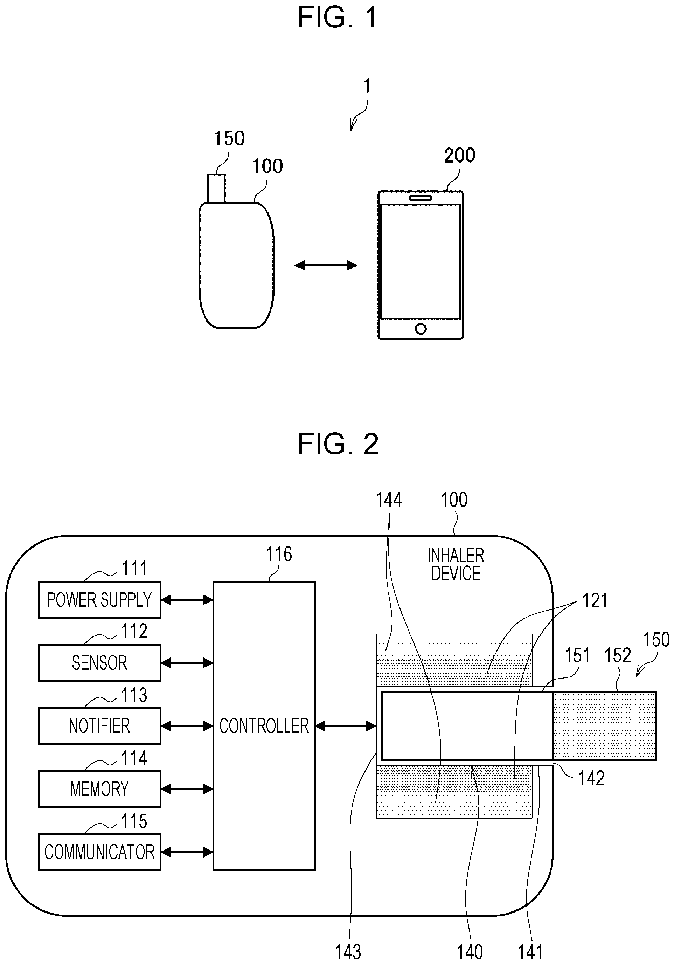

Fig. 1 illustrates a configuration example of a system 1 according to an embodiment. As illustrated in Fig. 1, the system 1 includes an inhaler device 100 and a terminal device 200.

The inhaler device 100 is operable to generate material to be inhaled by the user. In the example described below, the material generated by the inhaler device 100 is an aerosol. Alternatively, the material generated by the inhaler device may be gas. The inhaler device 100 uses a stick substrate 150 to generate an aerosol. The stick substrate 150 is an exemplary substrate containing an aerosol source. The inhaler device 100 is an exemplary aerosol generating device designed to generate an aerosol by heating an aerosol source contained in a substrate.

The terminal device 200 is an information processing device designed to perform various kinds of information processing related to the inhaler device 100. The terminal device 200 is a device used by the user of the inhaler device 100. The terminal device 200 may be any device such as a smartphone, tablet terminal, wearable device, or personal computer (PC). Alternatively, the terminal device 200 may be a charger for charging the inhaler device 100.

The terminal device 200 can be used to configure the settings of the inhaler device 100. For example, the terminal device 200 receives a user operation to configure a setting of the inhaler device 100 and configures the setting of the inhaler device 100.

(2) Configuration example of inhaler device

Fig. 2 is a schematic diagram of a configuration example of the inhaler device according to the present embodiment. As illustrated in Fig. 2, the inhaler device 100 includes a power supply 111, a sensor 112, a notifier 113, a memory 114, a communicator 115, a controller 116, a heater 121, a holder 140, and a heat insulator 144.

The power supply 111 stores electric power.

The power supply 111 supplies electric power to the structural elements of the inhaler device 100 under the control of the controller 116. The power supply 111 may be a rechargeable battery such as a lithium ion secondary battery.

The sensor 112 acquires various items of information regarding the inhaler device 100. In an example, the sensor 112 may be a pressure sensor such as a condenser microphone, a flow sensor, or a temperature sensor, and acquire a value generated in accordance with the user's inhalation. In another example, the sensor 112 may be an input device that receives information input by the user, such as a button or a switch.

The notifier 113 provides information to the user. The notifier 113 may be a light-emitting device that emits light, a display device that displays an image, a sound output device that outputs sound, or a vibration device that vibrates.

The memory 114 stores various items of information for operation of the inhaler device 100. The memory 114 may be a non-volatile storage medium such as flash memory.

The communicator 115 is a communication interface capable of communication in conformity with any wired or wireless communication standard. Such a communication standard may be, for example, Wi-Fi (registered trademark), Bluetooth (registered trademark), near-field communication (NFC), or a standard using a low-power wide-area network (LPWAN).

The controller 116 functions as an arithmetic processing unit and a control circuit, and controls the overall operations of the inhaler device 100 in accordance with various programs. The controller 116 includes an electronic circuit such as a central processing unit (CPU) or a microprocessor, for example.

The holder 140 has an internal space 141, and holds a stick substrate 150 in a manner partially accommodated in the internal space 141. The holder 140 has an opening 142 that allows the internal space 141 to communicate with outside. The holder 140 holds the stick substrate 150 that is inserted into the internal space 141 through the opening 142. For example, the holder 140 may be a tubular body having the opening 142 and a bottom 143 on its ends, and may define the pillar-shaped internal space 141. The holder 140 connects with an airflow path that supplies air to the internal space 141. For example, a side surface of the inhaler device 100 has an air inlet hole that is an inlet of air into the airflow path. For example, the bottom 143 has an air outlet hole that is an outlet of the air from the airflow path to the internal space 141.

The stick substrate 150 includes a substrate 151 and an inhalation port 152. The substrate 151 includes an aerosol source. The aerosol source is a liquid, specifically, for example, a polyhydric alcohol such as glycerine or propylene glycol, or water. The aerosol source may include a flavor component that is either derived from tobacco or not derived from tobacco. For the inhaler device 100 that is a medical inhaler such as a nebulizer, the aerosol source may include a medicine. In the present configuration example, the aerosol source is not limited to a liquid, but may be a solid. The stick substrate 150 held by the holder 140 includes the substrate 151 at least partially accommodated in the internal space 141 and the inhalation port 152 at least partially protruding from the opening 142. When the user inhales with the inhalation port 152 protruding from the opening 142 in his/her mouth, air flows into the internal space 141 through the airflow path (not illustrated), and the air and an aerosol generated from the substrate 151 reach inside the mouth of the user.

The heater 121 heats the aerosol source to atomize the aerosol source and generate the aerosol. In the example illustrated in Fig. 2, the heater 121 has a film-like shape and surrounds the outer circumference of the holder 140. Subsequently, heat produced from the heater 121 heats the substrate 151 of the stick substrate 150 from the outer circumference, generating the aerosol. When electric power is supplied to the heater 121 from the power supply 111, the heater 121 produces heat. In an example, the electric power may be supplied in response to the sensor 112 detecting a start of the user's inhalation and/or an input of predetermined information. Subsequently, the supply of the electric power may be stopped in response to the sensor 112 detecting an end of the user's inhalation and/or an input of predetermined information.

The heat insulator 144 prevents heat from transferring from the heater 121 to the other structural elements. For example, the heat insulator 144 may be a vacuum heat insulator or an aerogel heat insulator.

The configuration example of the inhaler device 100 has been described above. The inhaler device 100 is not limited to the above configuration, and may be configured in various ways as exemplified below.

In an example, the heater 121 may have a blade-like shape, and may be disposed so that the heater 121 protrudes from the bottom 143 of the holder 140 toward the internal space 141. In this case, the heater 121 having the blade-like shape is inserted into the substrate 151 of the stick substrate 150 and heats the substrate 151 of the stick substrate 150 from its inside. In another example, the heater 121 may be disposed so that the heater 121 covers the bottom 143 of the holder 140. In still another example, the heater 121 may be implemented as a combination of two or more selected from a first heater that covers the outer circumference of the holder 140, a second heater having the blade-like shape, and a third heater that covers the bottom 143 of the holder 140.

In another example, the holder 140 may include an opening/closing mechanism that at least partially opens and closes an outer shell defining the internal space 141. Examples of the opening/closing mechanism include a hinge. By opening and closing the shell, the holder 140 may clamp the stick substrate 150 inserted in the internal space 141. In this case, the heater 121 may be at the sandwiching position of the holder 140 and may produce heat while pressing the stick substrate 150.

In addition, means for atomizing the aerosol source is not limited to heating by the heater 121. For example, the means for atomizing the aerosol source may be induction heating. In this case, the inhaler device 100 includes at least an electromagnetic induction source such as a coil that generates a magnetic field instead of the heater 121. The inhaler device 100 may be provided with a susceptor that produces heat by the induction heating, or the stick substrate 150 may include the susceptor.

The inhaler device 100 cooperates with the stick substrate 150 to generate the aerosol to be inhaled by the user. Thus, the combination of the inhaler device 100 and the stick substrate 150 may be considered an aerosol generating system.

(3) Configuration example of terminal device

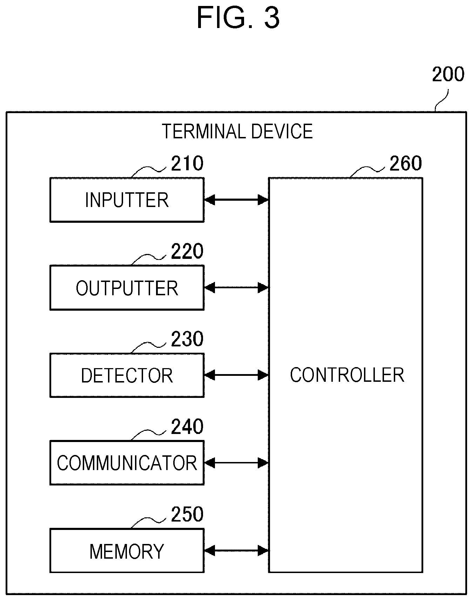

Fig. 3 is a block diagram illustrating a configuration example of the terminal device 200 according to the present embodiment. As illustrated in Fig. 3, the terminal device 200 includes an inputter 210, an outputter 220, a detector 230, a communicator 240, a memory 250, and a controller 260.

The inputter 210 has a function of receiving inputs of various kinds of information. The inputter 210 may include an input device for receiving inputs of information by the user. Examples of the input device include a button, a keyboard, a touch panel, and a microphone. The inputter 210 may also include various sensors such as image sensors.

The outputter 220 has a function of outputting information. The outputter 220 may include an output device for providing information for the user. Examples of the output device include a display device for displaying information, a light-emitting device for illumination, a vibration device for vibration, and a sound output device for outputting sound. An example of the display device is a display. An example of the light-emitting device is a light-emitting diode (LED). An example of the vibration device is an eccentric motor. An example of the sound output device is a speaker. The outputter 220 outputs information inputted from the controller 260, thereby providing the information to the user.

The detector 230 has a function of detecting information about the terminal device 200. The detector 230 may detect the location information about the terminal device 200. For example, the detector 230 detects the location information including the latitude and longitude of the device by receiving GNSS signals from global navigation satellite system (GNSS) satellites (for example, GPS signals from global positioning system (GPS) satellites). The detector 230 may detect movement of the terminal device 200. For example, the detector 230 includes a gyro sensor and an acceleration sensor to detect angular velocity and acceleration.

The communicator 240 is a communication interface designed to transmit and receive information between the terminal device 200 and other devices. The communicator 240 provides communication in conformity with a wired or wireless communication standard. Such a communication standard may be, for example, Universal Serial Bus (USB), Wi-Fi (registered trademark), Bluetooth (registered trademark), near-field communication (NFC), or a standard using a low-power wide-area network (LPWAN).

The memory 250 is operable to store various kinds of information. The memory 250 may be a non-volatile storage medium such as a flash memory.

The controller 260 functions as an arithmetic processing unit or controller to provide overall control on operations in the terminal device 200 in accordance with various programs. The controller 260 includes an electronic circuit such as a central processing unit (CPU) or a microprocessor, for example. Additionally, the controller 260 may include a read-only memory (ROM) for storing, for example, programs and operational parameters for use and a random-access memory (RAM) for temporarily storing, for example, parameters that may change according to circumstances. The terminal device 200 performs different operations under the control of the controller 260. An example of the operations controlled by the controller 260 is processing information inputted with the inputter 210, outputting information with the outputter 220, detecting information with the detector 230, transmitting and receiving information with the communicator 240, and storing and reading information with the memory 250. The controller 260 also controls other operations performed by the terminal device 200, including, for example, inputting information to the structural elements and operations based on information outputted by the structural elements.

The function of the controller 260 may be implemented using an application. The application may be preinstalled or downloaded. The function of the controller 260 may be implemented by progressive web apps (PWA).

<2. Technical Features>

(1) Heating profile

The controller 116 controls the operation of the heater 121 based on a heating profile. Control of the operation of the heater 121 is achieved by controlling the power supplied from the power supply 111 to the heater 121. The heater 121 heats the stick substrate 150 using the electric power supplied from the power supply 111.

A heating profile corresponds to control information for controlling the temperature used to heat the aerosol source. The heating profile defines parameters related to the temperature used to heat the aerosol source. An example of the temperature used to heat the aerosol source is the temperature of the heater 121. An example of the parameters related to the temperature used to heat the aerosol source is the target value of temperature (hereinafter also referred to as target temperature) of the heater 121. The temperature of the heater 121 may be controlled to vary with the elapsed time since heating began. In that case, the heating profile includes information that defines the time-series changes in the target temperature. In another example, the heating profile may include parameters (hereinafter also referred to as power supply parameters) that define the method of supply power to the heater 121. For example, the power supply parameters include parameters indicating the voltage applied to the heater 121, the ON/OFF status of power supply to the heater 121, and the feedback control method employed. The ON/OFF status of power supply to the heater 121 may be considered the ON/OFF status of the heater 121.

The controller 116 controls the operation of the heater 121 to ensure that the temperature (hereinafter also referred to as actual temperature) of the heater 121 changes to match the target temperature defined in the heating profile. The heating profile is typically designed such that the user can taste optimum flavor when the user inhales the aerosol generated from the stick substrate 150. As such, by controlling operation of the heater 121 in accordance with the heating profile, the user can enjoy optimum flavor.

The temperature of the heater 121 may be controlled by, for example, a known feedback control technology. The feedback control technology may be, for example, a proportional-integral-differential (PID) controller. The controller 116 can provide control to supply electric power from the power supply 111 to the heater 121 in pulse form using pulse width modulation (PWM) or pulse frequency modulation (PFM). In this case, the controller 116 is able to control the temperature of the heater 121 by controlling the duty ratio of the electric power pulses or controlling frequency in feedback control. Alternatively, the controller 116 may simply perform on/off control in feedback control. For example, the controller 116 may provide heating with the heater 121 until the actual temperature reaches a target temperature; when the actual temperature reaches the target temperature, the controller 116 may suspends heating with the heater 121; when the actual temperature drops below the target temperature, the controller 116 may restart heating with the heater 121.

It is possible to quantify the temperature of the heater 121 by, for example, measuring or estimating the electrical resistance of the heater 121 (more specifically, the thermal resistor that constitutes the heater 121). This is because the electrical resistance of thermal resistors changes with temperature. The electrical resistance of a thermal resistor can be estimated by, for example, measuring the amount of voltage drop across the thermal resistor. The amount of voltage drop across a thermal resistor can be measured using a voltage sensor that measures the potential difference across the thermal resistor.

In another example, the temperature of the heater 121 may be measured using a temperature sensor such as a thermistor disposed close to the heater 121.

The period from the start to the end of aerosol generation using the stick substrate 150 is hereinafter also referred to as the heating session. In other words, the heating session is the period during which power supplied to the heater 121 is controlled in accordance with the heating profile. The start of the heating session is when heating according to the heating profile starts. The end of the heating session is when the amount of the aerosol being generated becomes insufficient. The heating session includes a preheating period as the first half and a puff-available period as the second half. The puff-available period is the time during which an adequate amount of aerosol is expected to be generated. The preheating period is the time from the start of heating until the puff-available period starts. Heating performed during the preheating period is also referred to as preheating.

The notifier 113 may provide information indicating when preheating ends to the user. For example, the notifier 113 provides information that notifies in advance the user about the upcoming end of preheating before preheating ends, or information that notifies the user that preheating has ended at the end timing of preheating. Notification to the user may be performed using, for example, light-emitting diode (LED) illumination or vibration. Based on these notifications, the user can start puffing immediately after the end of preheating.

Similarly, the notifier 113 may provide information indicating when the puff-available period ends to the user. For example, the notifier 113 provides information that notifies in advance the user about the upcoming end of the puff-available period before the puff-available period ends, or information that notifies the user that the puff-available period has ended at the end timing of the puff-available period. Notification to the user may be performed using, for example, LED illumination or vibration. Based on these notifications, the user can continue puffing until the puff-available period ends.

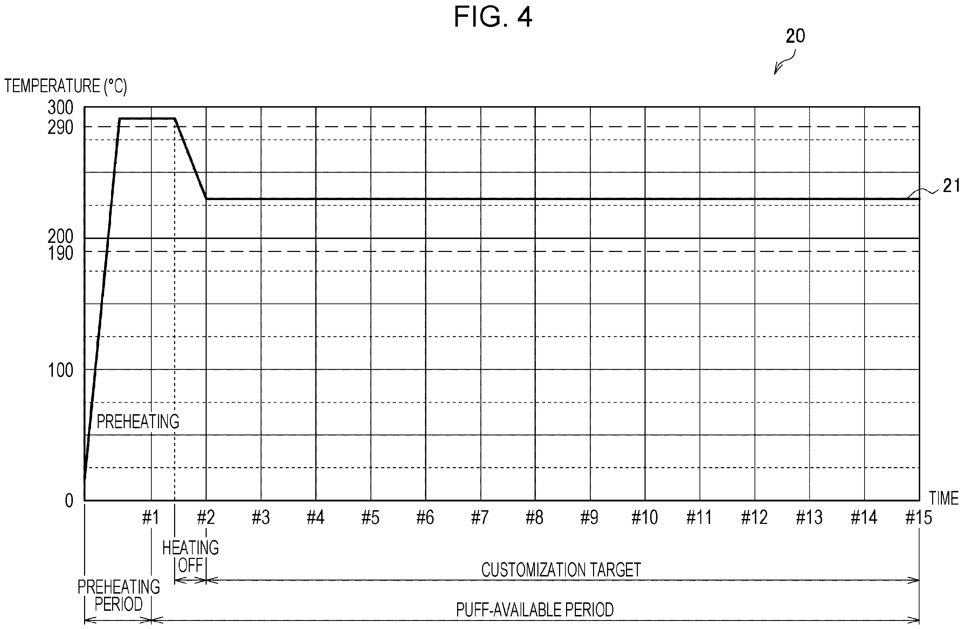

An exemplary heating profile will be described with reference to Fig. 4. Fig. 4 is a graph schematically illustrating an exemplary heating profile. The horizontal axis of a graph 20 represents time. The vertical axis of the graph 20 represents temperature. A line 21 illustrates the time-series changes in the target temperature. As illustrated in Fig. 4, after heating starts, the target temperature rapidly rises to approximately 300°C, then decreases to approximately 230°C, and remains stable until the end. During the period when the temperature decreases, power supply to the heater 121 is suspended, thereby turning off heating. On the horizontal axis, first to fifteenth timings when the user puffs (hereinafter also referred to as puff timings) are indicated by #1 to #15. Puff timings may be preset. The time until the first puff timing corresponds to the preheating period, and the subsequent puff-available period includes fifteen designated puff timings.

Restrictions may be imposed on customizing the heating profile (for example, adjusting the target temperature). For example, in the example illustrated in Fig. 4, the second puff timing to the fifteenth puff timing are customization targets, and the adjustment of the target temperature for the first puff timing is prohibited. This is because it is desirable to rapidly raise the temperature of the heater 121 and maintain the temperature of the heater 121 at a high temperature during the preheating period, and excessive temperature changes are not desirable. From the second puff timing to the fifteenth puff timing, the target temperature can be set within a range limited from the lower limit temperature of 190°C to the upper limit temperature of 290°C, and adjustments exceeding this range may be prohibited. The allowable temperature range may be set in any manner, for example, according to the specifications of the heater 121.

(2) Heating profile customization

The terminal device 200 (for example, the controller 260) controls a customization operation. A customization operation is designed to adjust the heating profile used by the inhaler device 100. The terminal device 200 repeatedly performs the customization operation until a heating profile that achieves the smoke taste desired by the user is generated. By repeating the customization operation, the heating profile can gradually approximate to the ideal heating profile that achieves the smoke taste desired by the user.

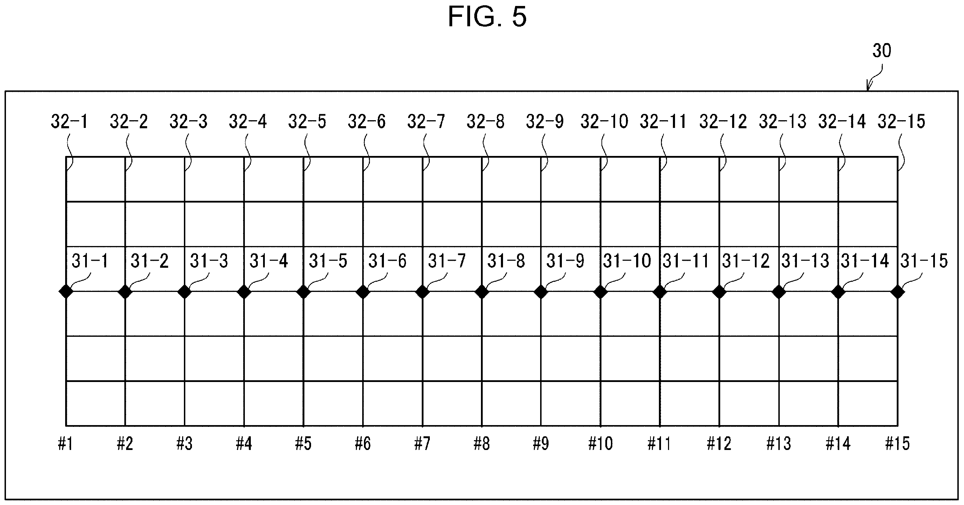

The customization operation includes generating a customization screen. The customization screen is a display image that indicates an operational object designed to set the target temperature included in the heating profile used by the inhaler device 100. The customization operation also includes adjusting the target temperature included in the heating profile, based on user operations with the operational object displayed on the generated customization screen. Typically, the smoke taste can be strengthened by increasing the target temperature and weakened by decreasing the target temperature. This configuration allows the user to gradually adjust the heating profile to more closely match the desired smoke taste by repeatedly performing the operation with the operational object displayed on the customization screen. An example of the customization screen will be described with reference to Fig. 5.

Fig. 5 illustrates an example of the customization screen according to the present embodiment. A customization screen 30 includes axes 32 (32-1 to 312-15) having points 31 (31-1 to 31-15) that are configured to be movable. The points 31 are an example of the operational object that users can operate. The positions on the axes 32 correspond to values (specifically, temperatures) that can be set as the target temperature. That implies that the temperature corresponding to the position of the point 31 can be set as the target temperature. The user can adjust the target temperature included in the heating profile by moving the points 31 on the axes 32.

As illustrated in Fig. 5, the customization screen 30 includes multiple axes 32. Each axis 32 corresponds to a specific puff timing among the puff timings. The controller 260 sets the target temperature for each puff timing based on the position of the point 31 on each axis 32. For example, the axis 32-3 corresponds to the third puff timing. The controller 260 sets the target temperature for the third puff timing based on the position of the point 31-3 on the axis 32-3. The same applies to the other puff timings. When the terminal device 200 detects the start of heating in the inhaler device 100, the terminal device 200 may prompt the user to perform puffing by displaying a screen or vibrating the inhaler device 100 at each puff timing. The terminal device 200 may display the customization screen 30 during the heating session to receive user operations. The terminal device 200 may display the customization screen 30 after the heating session has ended to receive user operations. This configuration allows the user to customize the heating profile to achieve the desired smoke taste at each puff timing.

In the customization operation, the terminal device 200 adjusts the target temperature based on the position of the point 31 on the axis 32. More specifically, a reference value corresponding to a reference position on the axis 32 is provided; in the customization operation, the terminal device 200 sets the target temperature to a specific value obtained by adding or subtracting a second value that corresponds to the distance between the reference position and the position of the point 31 to or from the reference value. When the point 31 is located higher than the reference position, the terminal device 200 sets the target temperature to a value obtained by adding the second value to a first value. When the point 31 is located lower than the reference position, the terminal device 200 sets the target temperature to a value obtained by subtracting the second value from the first value. The greater the distance between the reference position and the position of the point 31, the larger the second value. The shorter the distance between the reference position and the position of the point 31, the smaller the second value. The first value corresponds to the target temperature before adjustment. The second value corresponds to the amount of change from the target temperature before adjustment. Overall, the terminal device 200 increases the change in the target temperature as the distance from the reference position to the position of the point 31 increases. Conversely, the terminal device 200 decreases the change in the target temperature as the distance from the reference position to the position of the point 31 decreases. This configuration allows the user to intuitively and easily adjust the target temperature.

On the customization screen 30, the points 31 can be moved along the axes 32 in units of a predetermined distance. In the example illustrated in Fig. 5, the axis 32 has seven graduation marks. The point 31 is positioned at the center graduation mark and can be moved up to three graduation marks upward or downward. The user can set the target temperature by positioning the point 31 at any of the seven graduation marks.

When repeatedly performing the customization operation, the terminal device 200 sets a method for adjusting the target temperature for the subsequent customization operation based on the adjustment pattern of the target temperature in the previous customization operation. This configuration optimizes the method for adjusting the target temperature in the subsequent customization operation based on the adjustment pattern of the target temperature in the previous customization operation. Optimizing the method for adjusting the target temperature in this manner enhances usability in the heating profile customization.

Specifically, the terminal device 200 presets the correspondence relations for the subsequent customization operation between the positions on the axis 32 and the temperatures to be designated as the target temperature when the point 31 is located at any of the positions. This presetting is configured based on the adjustment pattern of the target temperature in the previous customization operation. Specifically, the terminal device 200 updates the correspondence relations between the positions on the axis 32 and the temperatures corresponding to the positions, based on the degree to which the target temperature was raised or lowered in the previous customization operation. This configuration enables the update of the correspondence relations for the subsequent customization operation to match the user's intention, such as making significant or minor changes to the target temperature. The user's intention can be inferred from the adjustment pattern of the target temperature in the previous customization operation. With this configuration, it is possible to establish a heating profile that achieves the smoke taste desired by the user with fewer repetitions of the customization operation.

First, the terminal device 200 sets the first value for the subsequent customization operation based on the target temperature that has been set for the previous customization operation. More specifically, the terminal device 200 sets the first value for the subsequent customization operation to the target temperature that has been set for the previous customization operation. For example, the terminal device 200 sets the first value for a specific puff timing to the target temperature that has been set for the puff timing corresponding to the previous customization operation. This configuration enables repetitive adjustments to the target temperature based on the previously set target temperature, during the process of repeatedly performing the customization operation. For the first customization operation, the terminal device 200 sets the first value to an initial value.

The initial positions of the points 31 in the customization screen 30 correspond to the reference positions on the axes 32. The reference position corresponds to the first value, that is, the target temperature before adjustment. When the point 31 remains at the reference position after a user operation is received, the terminal device 200 does not change the target temperature. When the user moves the point 31 from the reference position, the terminal device 200 changes the target temperature based on this movement. This configuration allows the user to intuitively adjust the heating profile by moving the point 31 from the reference position.

The reference position may be the center of the axis 32. In the example illustrated in Fig. 5, the reference positions are located the centers of the axes 32 in the vertical direction. When the point 31 is moved to a position higher than the center of the axis 32, the terminal device 200 raises the target temperature above the previous target temperature before adjustment. When the point 31 is moved to a position lower than the center of the axis 32, the terminal device 200 lowers the target temperature below the previous target temperature before adjustment. This configuration allows the user to raise or lower the target temperature by moving the point 31 upward or downward from the reference position.

Second, the terminal device 200 sets the second value per unit distance for the subsequent customization operation, based on the amount of change in the target temperature in the previous customization operation. Specifically, the terminal device 200 sets the amount of temperature change per graduation mark on the axis 32 for the subsequent customization operation, based on the amount of change in the target temperature in the previous customization operation. The amount of temperature change per graduation mark on the axis 32 is hereinafter also referred to as resolution.

Specifically, the terminal device 200 increases the resolution configured for the subsequent customization operation as the amount of change in the target temperature in the previous customization operation increases. The terminal device 200 decreases the resolution configured for the subsequent customization operation as the amount of change in the target temperature in the previous customization operation decreases. A conceivable flow for customizing the heating profile typically involves significantly changing the target temperature to roughly approximate the ideal smoke taste, followed by finely changing the target temperature to fine-tune the smoke taste. In this regard, it is possible to automatically establish heating profile customization following the typical flow by adjusting the resolution based on the amount of change in the target temperature in the previous customization operation.

The terminal device 200 may set the resolution for the subsequent customization operation such that an integer multiple of the resolution for the subsequent customization operation matches the amount of change in the target temperature in the previous customization operation. In other words, the terminal device 200 may set the resolution for the subsequent customization operation to a value obtained by dividing the amount of change in the target temperature in the previous customization operation by an integer. It is desirable that the integer remains invariant across repetitions of the customization operation. This configuration allows the user to adjust the target temperature for the subsequent customization operation based on the amount of change in the target temperature in the previous customization operation.

For example, the terminal device 200 may set the resolution according to the following expression.
[Math. 1]

$$\Delta T = |(T_{n-1} - T_{n-2})/2| \qquad \dots(1)$$

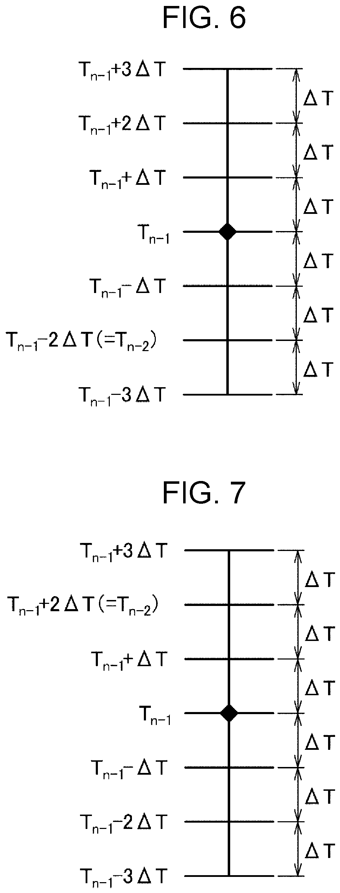

In the expression, $\Delta T$ represents the resolution, n represents the number assigned to the subsequent customization operation, $T_{n-1}$ represents the target temperature that has been set for the previous customization operation, and $T_{n-2}$ is the target temperature that has been set in the second previous customization operation. The correspondence relations between the positions on the axis 32 and temperatures when Expression (1) is used will be described with reference to Figs. 6 and 7.

Fig. 6 illustrates the correspondence relation between the positions on the axis 32 and the temperatures for the subsequent customization operation when the target temperature is raised in the previous customization operation. As illustrated in Fig. 6, the terminal device 200 sets the temperature corresponding to the graduation mark at the center of the axis 32 to the target temperature $T_{n-1}$ that has been set in the previous customization operation. The terminal device 200 sets the temperature corresponding to the nearest graduation mark above the center of the axis 32 to $T_{n-1} + \Delta T$, sets the temperature corresponding to the second nearest graduation mark above the center of the axis 32 to $T_{n-1} + 2\Delta T$, and sets the temperature corresponding to the third nearest graduation mark above the center of the axis 32 to $T_{n-1} + 3\Delta T$. The terminal device 200 sets the temperature corresponding to the nearest graduation mark below the center of the axis 32 to $T_{n-1} - \Delta T$, sets the temperature corresponding to the second nearest graduation mark below the center of the axis 32 to $T_{n-1} - 2\Delta T$, and sets the temperature corresponding to the third nearest graduation mark below the center of the axis 32 to $T_{n-1} - 3\Delta T$. The resolution $\Delta T$ is calculated using Expression (1). Given that $T_{n-1} > T_{n-2}$, $T_{n-1} - 2\Delta T$ is equal to $T_{n-2}$.

Fig. 7 illustrates the correspondence relation between the positions on the axis 32 and the temperatures for the subsequent customization operation when the target temperature is lowered in the previous customization operation. As illustrated in Fig. 7, the terminal device 200 sets the temperature corresponding to the graduation mark at the center of the axis 32 to the target temperature $T_{n-1}$ that has been set in the previous customization operation. The terminal device 200 sets the temperature corresponding to the nearest graduation mark above the center of the axis 32 to $T_{n-1} + \Delta T$, sets the temperature corresponding to the second nearest graduation mark above the center of the axis 32 to $T_{n-1} + 2\Delta T$, and sets the temperature corresponding to the third nearest graduation mark above the center of the axis 32 to $T_{n-1} + 3\Delta T$. The terminal device 200 sets the temperature corresponding to the nearest graduation mark below the center of the axis 32 to $T_{n-1} - \Delta T$, sets the temperature corresponding to the second nearest graduation mark below the center of the axis 32 to $T_{n-1} - 2\Delta T$, and sets the temperature corresponding to the third nearest graduation mark below the center of the axis 32 to $T_{n-1} - 3\Delta T$. The resolution $\Delta T$ is calculated using Expression (1). Given that $Tn_{-1} < T_{n-2}$, $T_{n-1} + 2\Delta T$ is equal to $T_{n-2}$.

According to Expression (1), the double of the resolution $\Delta T$ for the subsequent customization operation is equal to the amount of change in the target temperature in the previous customization operation. Thus, by moving the point 31 by two graduation marks from the center of the axis 32, the target temperature can be changed by the same amount as the previous time. Consequently, by moving the point 31 upward or downward by two graduation marks from the center of the axis 32, the target temperature can be changed in the same manner as the previous time, or the change in the target temperature in the previous time can be cancelled.

(3) Specific examples

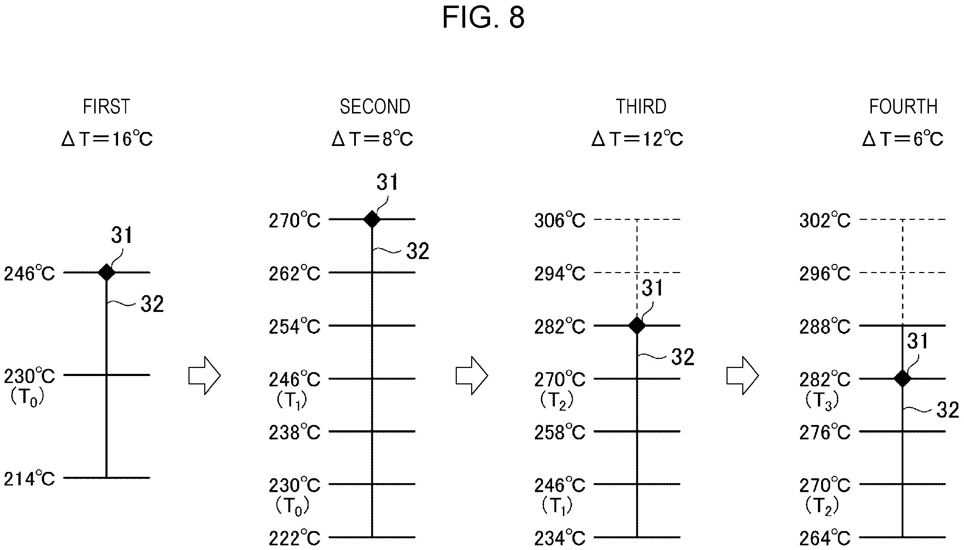

The preceding discussion has described a method of changing the target temperature for the subsequent customization operation based on the adjustment pattern of the target temperature in the previous customization operation. The following describes specific examples with reference to Figs. 8 to 11.

- First specific example

Fig. 8 illustrates a first specific example of updating the correspondence relation between the graduation marks on the axis 32 corresponding to one puff timing and temperatures. The drawing indicates an example where the target temperature is raised in the second and third customization operations. In the first customization operation, three graduation marks are set on the axis 32. In the second and subsequent customization operations, seven graduation marks are set on the axis 32. In this way, the operation can be made easier to understand by reducing the number of graduation marks, and fine customization can be made by increasing the number of graduation marks.

In the first customization operation, the terminal device 200 sets the temperature corresponding to the graduation mark at the center of the axis 32 to 230°C, which is an initial value $T_0$ and sets the resolution $\Delta T$ to 16°C. More specifically, as illustrated in Fig. 8, the terminal device 200 sets 246°C, 230°C, and 214°C at the graduation marks on the axis 32 in this order from the top. In the first customization operation, the point 31 is moved by the user from the center of the axis 32 to the nearest graduation mark above the center of the axis 32. The terminal device 200 accordingly changes the target temperature from 230°C to 246°C.

In the first customization operation, the target temperature is raised by 16°C and set to 246°C. Accordingly, for the second customization operation, the terminal device 200 sets the temperature corresponding to the graduation mark at the center of the axis 32 to 246°C, which is a target temperature $T_1$ that has been set in the first customization operation, and sets the resolution $\Delta T$ to 8°C according to Expression (1). Specifically, as illustrated in Fig. 8, the terminal device 200 sets 270°C, 262°C, 254°C, 246°C, 238°C, 230°C, and 222°C at the graduation marks on the axis 32 in this order from the top. In the second customization operation, the point 31 is moved by the user from the center of the axis 32 to the third nearest graduation mark above the center of the axis 32. The terminal device 200 accordingly changes the target temperature from 246°C to 270°C

In the second customization operation, the target temperature is raised by 24°C and set to 270°C. Accordingly, for the third customization operation, the terminal device 200 sets the temperature corresponding to the graduation mark at the center of the axis 32 to 270°C, which is a target temperature $T_2$ that has been set in the second customization operation, and sets the resolution $\Delta T$ to 12°C according to Expression (1). Specifically, as illustrated in Fig. 8, the terminal device 200 sets 306°C, 294°C, 282°C, 270°C, 258°C, 246°C, and 234°C at the graduation marks on the axis 32 in this order from the top. In the third customization operation, the point 31 is moved by the user from the center of the axis 32 to the nearest graduation mark above the center of the axis 32. Therefore, the terminal device 200 changes the target temperature from 270°C to 282°C.

In the third customization operation, the target temperature is raised by 12°C and set to 282°C. Accordingly, for the fourth customization operation, the terminal device 200 sets the temperature corresponding to the graduation mark at the center of the axis 32 to 282°C, which is a target temperature $T_3$ that has been set in the third customization operation, and sets the resolution $\Delta T$ to 6°C according to Expression (1). Specifically, as illustrated in Fig. 8, the terminal device 200 sets 302°C, 296°C, 288°C, 282°C, 276°C, 270°C, and 264°C at the graduation marks on the axis 32 in this order from the top.

As illustrated in Fig. 8, for the third and fourth customization operations, the portion corresponding to the temperatures exceeding 290°C, which is the upper limit temperature that can be set as the target temperature, are indicated by dashed lines in the axis 32. The movement of the point 31 to the portion indicated by the dashed lines is prohibited. This configuration clearly indicates to the user that setting a temperature exceeding the upper limit temperature of 290°C as the target temperature is prohibited.

- Second specific example

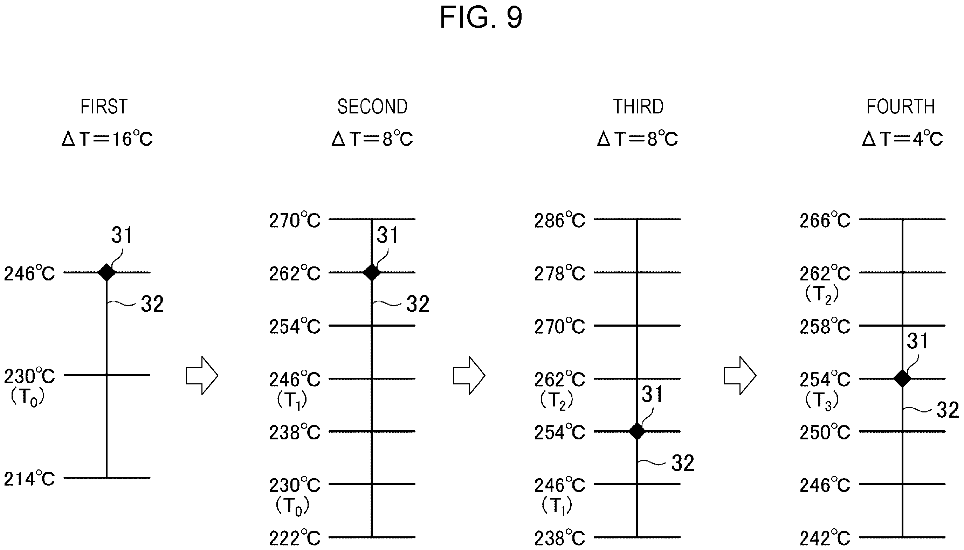

Fig. 9 illustrates a second specific example of updating the correspondence relation between the graduation marks on the axis 32 corresponding to one puff timing and temperatures. The drawing indicates an example where the target temperature is raised in the second customization operation and lowered in the third customization operation. The number of graduation marks on the axis 32 for the first to fourth customization operations is the same as illustrated in Fig. 8.

In the first customization operation, the terminal device 200 sets the temperature corresponding to the graduation mark at the center of the axis 32 to 230°C, which is an initial value $T_0$ and sets the resolution $\Delta T$ to 16°C. More specifically, as illustrated in Fig. 9, the terminal device 200 sets 246°C, 230°C, and 214°C at the graduation marks on the axis 32 in this order from the top. In the first customization operation, the point 31 is moved by the user from the center of the axis 32 to the nearest graduation mark above the center of the axis 32. The terminal device 200 accordingly changes the target temperature from 230°C to 246°C.

In the first customization operation, the target temperature is raised by 16°C and set to 246°C. Accordingly, for the second customization operation, the terminal device 200 sets the temperature corresponding to the graduation mark at the center of the axis 32 to 246°C, which is a target temperature $T_1$ that has been set in the first customization operation, and sets the resolution $\Delta T$ to 8°C according to Expression (1). Specifically, as illustrated in Fig. 8, the terminal device 200 sets 270°C, 262°C, 254°C, 246°C, 238°C, 230°C, and 222°C at the graduation marks on the axis 32 in this order from the top. In the second customization operation, the point 31 is moved by the user from the center of the axis 32 to the second nearest graduation mark above the center of the axis 32. The terminal device 200 accordingly changes the target temperature from 246°C to 262°C.

In the second customization operation, the target temperature is raised by 16°C and set to 262°C. Accordingly, for the third customization operation, the terminal device 200 sets the temperature corresponding to the graduation mark at the center of the axis 32 to 262°C, which is a target temperature $T_2$ that has been set in the second customization operation, and sets the resolution $\Delta T$ to 8°C according to Expression (1). Specifically, as illustrated in Fig. 9, the terminal device 200 sets 286°C, 278°C, 270°C, 262°C, 254°C, 246°C, and 238°C at the graduation marks on the axis 32 in this order from the top. In the third customization operation, the point 31 is moved by the user from the center of the axis 32 to the nearest graduation mark below the center of the axis 32. The terminal device 200 accordingly changes the target temperature from 262°C to 254°C.

In the third customization operation, the target temperature is lowered by 8°C and set to 254°C. Accordingly, for the fourth customization operation, the terminal device 200 sets the temperature corresponding to the graduation mark at the center of the axis 32 to 254°C, which is a target temperature $T_3$ that has been set in the third customization operation, and sets the resolution $\Delta T$ to 4°C according to Expression (1). Specifically, as illustrated in Fig. 9, the terminal device 200 sets 266°C, 262°C, 258°C, 254°C, 250°C, 246°C, and 242°C at the graduation marks on the axis 32 in this order from the top.

- Third specific example

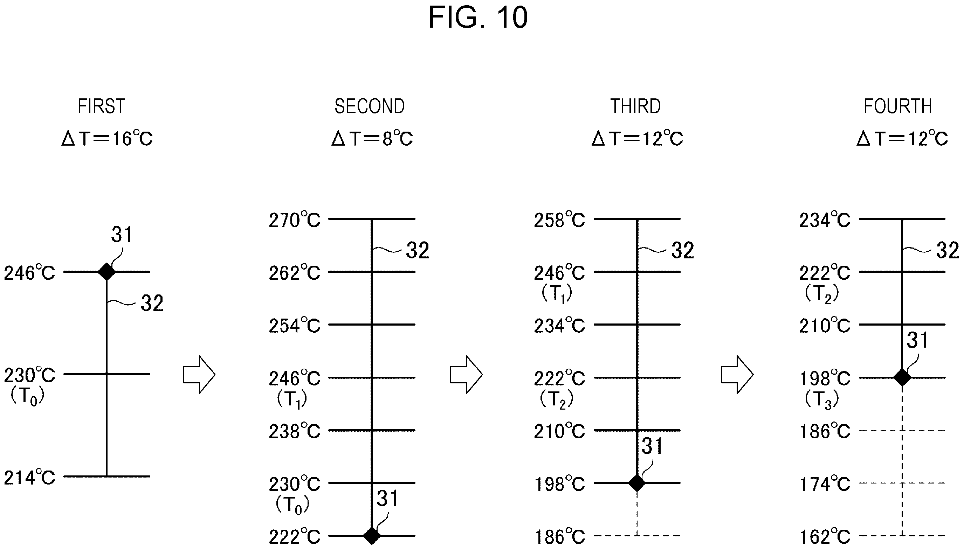

Fig. 10 illustrates a third specific example of updating the correspondence relation between the graduation marks on the axis 32 corresponding to one puff timing and temperatures. The drawing indicates an example where the target temperature is lowered in the second and third customization operations. The number of graduation marks on the axis 32 for the first to fourth customization operations is the same as illustrated in Fig. 8.

In the first customization operation, the terminal device 200 sets the temperature corresponding to the graduation mark at the center of the axis 32 to 230°C, which is an initial value $T_0$ and sets the resolution $\Delta T$ to 16°C. More specifically, as illustrated in Fig. 10, the terminal device 200 sets 246°C, 230°C, and 214°C at the graduation marks on the axis 32 in this order from the top. In the first customization operation, the point 31 is moved by the user from the center of the axis 32 to the nearest graduation mark above the center of the axis 32. The terminal device 200 accordingly changes the target temperature from 230°C to 246°C.

In the first customization operation, the target temperature is raised by 16°C and set to 246°C. Accordingly, for the second customization operation, the terminal device 200 sets the temperature corresponding to the graduation mark at the center of the axis 32 to 246°C, which is a target temperature $T_1$ that has been set in the first customization operation, and sets the resolution $\Delta T$ to 8°C according to Expression (1). Specifically, as illustrated in Fig. 10, the terminal device 200 sets 270°C, 262°C, 254°C, 246°C, 238°C, 230°C, and 222°C at the graduation marks on the axis 32 in this order from the top. In the second customization operation, the point 31 is moved by the user from the center of the axis 32 to the third nearest graduation mark below the center of the axis 32. The terminal device 200 accordingly changes the target temperature from 246°C to 222°C.

In the second customization operation, the target temperature is lowered by 24°C and set to 222°C. Accordingly, for the third customization operation, the terminal device 200 sets the temperature corresponding to the graduation mark at the center of the axis 32 to 222°C, which is a target temperature $T_2$ that has been set in the second customization operation, and sets the resolution $\Delta T$ to 12°C according to Expression (1). Specifically, as illustrated in Fig. 10, the terminal device 200 sets 258°C, 246°C, 234°C, 222°C, 210°C, 198°C, and 186°C at the graduation marks on the axis 32 in this order from the top. In the third customization operation, the point 31 is moved by the user from the center of the axis 32 to the second nearest graduation mark below the center of the axis 32. The terminal device 200 accordingly changes the target temperature from 222°C to 198°C.

In the third customization operation, the target temperature is lowered by 24°C and set to 198°C. Accordingly, for the fourth customization operation, the terminal device 200 sets the temperature corresponding to the graduation mark at the center of the axis 32 to 198°C, which is a target temperature $T_3$ that has been set in the third customization operation, and sets the resolution $\Delta T$ to 12°C according to Expression (1). Specifically, as illustrated in Fig. 10, the terminal device 200 sets 234°C, 222°C, 210°C, 198°C, 186°C, 174°C, and 162°C at the graduation marks on the axis 32 in this order from the top.

As illustrated in Fig. 10, for the third and fourth customization operations, the portion corresponding to the temperatures below 190°C, which is the lower limit temperature that can be set as the target temperature, are indicated by dashed lines in the axis 32. The movement of the point 31 to the portion indicated by the dashed lines is prohibited. This configuration clearly indicates to the user that setting a temperature below the lower limit temperature of 190°C as the target temperature is prohibited.

- Fourth specific example

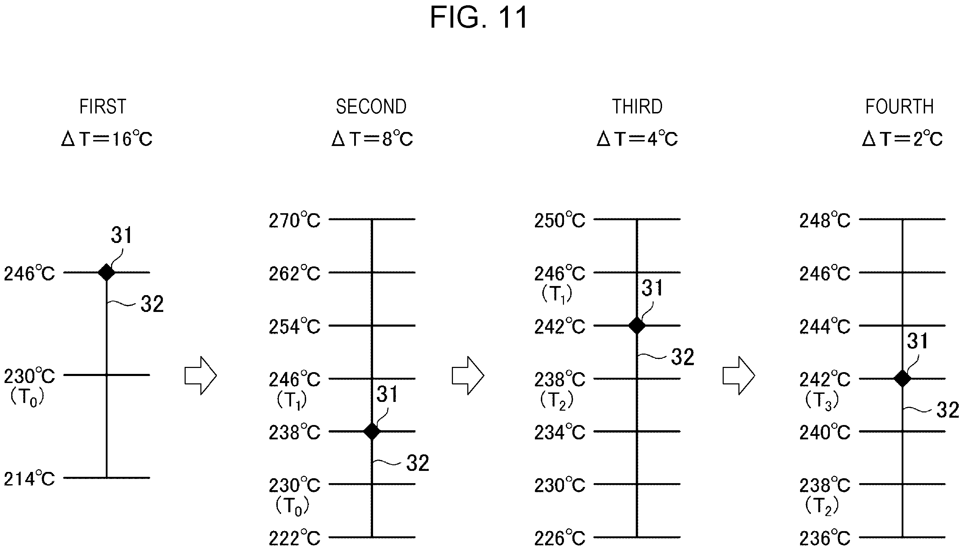

Fig. 11 illustrates a fourth specific example of updating the correspondence relation between the graduation marks on the axis 32 corresponding to one puff timing and temperatures. The drawing indicates an example where the target temperature is lowered in the second customization operation and raised in the third customization operation. The number of graduation marks on the axis 32 for the first to fourth customization operations is the same as illustrated in Fig. 8.

In the first customization operation, the terminal device 200 sets the temperature corresponding to the graduation mark at the center of the axis 32 to 230°C, which is an initial value $T_0$ and sets the resolution $\Delta T$ to 16°C. More specifically, as illustrated in Fig. 11, the terminal device 200 sets 246°C, 230°C, and 214°C at the graduation marks on the axis 32 in this order from the top. In the first customization operation, the point 31 is moved by the user from the center of the axis 32 to the nearest graduation mark above the center of the axis 32. The terminal device 200 accordingly changes the target temperature from 230°C to 246°C.

In the first customization operation, the target temperature is raised by 16°C and set to 246°C. Accordingly, for the second customization operation, the terminal device 200 sets the temperature corresponding to the graduation mark at the center of the axis 32 to 246°C, which is a target temperature $T_1$ that has been set in the first customization operation, and sets the resolution $\Delta T$

to 8°C according to Expression (1). Specifically, as illustrated in Fig. 11, the terminal device 200 sets 270°C, 262°C, 254°C, 246°C, 238°C, 230°C, and 222°C at the graduation marks on the axis 32 in this order from the top. In the second customization operation, the point 31 is moved by the user from the center of the axis 32 to the nearest graduation mark below the center of the axis 32. The terminal device 200 accordingly changes the target temperature from 246°C to 238°C.

In the second customization operation, the target temperature is lowered by 8°C and set to 238°C. Accordingly, for the third customization operation, the terminal device 200 sets the temperature corresponding to the graduation mark at the center of the axis 32 to 238°C, which is a target temperature $T_2$ that has been set in the second customization operation, and sets the resolution $\Delta T$ to 4°C according to Expression (1). Specifically, as illustrated in Fig. 11, the terminal device 200 sets 250°C, 246°C, 242°C, 238°C, 234°C, 230°C, and 226°C at the graduation marks on the axis 32 in this order from the top. In the third customization operation, the point 31 is moved by the user from the center of the axis 32 to the nearest graduation mark above the center of the axis 32. The terminal device 200 accordingly changes the target temperature from 238°C to 242°C.

In the third customization operation, the target temperature is raised by 4°C and set to 242°C. Accordingly, for the fourth customization operation, the terminal device 200 sets the temperature corresponding to the graduation mark at the center of the axis 32 to 242°C, which is a target temperature $T_3$ that has been set in the third customization operation, and sets the resolution $\Delta T$ to 2°C according to Expression (1). Specifically, as illustrated in Fig. 11, the terminal device 200 sets 248°C, 246°C, 244°C, 242°C, 240°C, 238°C, and 236°C at the graduation marks on the axis 32 in this order from the top.

Supplement

The temperatures corresponding to the individual graduation marks on the axis 32 and the resolution $\Delta T$ may be displayed or not displayed on the customization screen 30. For example, in the customization screen 30 illustrated in Fig. 5, the temperatures corresponding to the individual graduation marks on the axis 32 and the resolution $\Delta T$ for each puff timing are not displayed.

The preceding discussion has described an example in which one point 31 is displayed on one axis 32 in the customization screen 30. However, the present invention is not limited to this example. For example, as well as the point 31 designed to receive user operations, the point corresponding to the target temperature $T_{n-1}$ set in the previous customization operation and the point corresponding to the target temperature $T_{n-2}$ set in the second previous customization operation may be displayed on one axis 32. In this case, the user can adjust the target temperature referencing the history of adjustments.

(4) Process flow

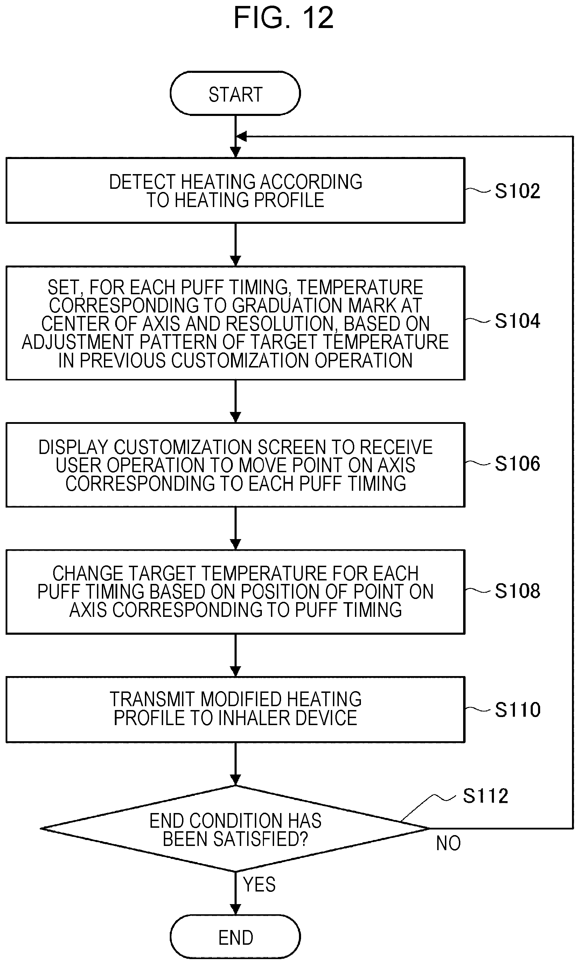

The following describes a process flow performed in the terminal device 200 according to the present embodiment with reference to Fig. 12. Fig. 12 is a flowchart illustrating an exemplary process flow performed in the terminal device 200 according to the present embodiment.

As illustrated in Fig. 12, first, the controller 260 detects the start of heating according to the heating profile (step S102). For example, upon starting heating according to the heating profile, the inhaler device 100 may transmit to the terminal device 200 information indicating that heating has started. The controller 260 can detect the start of heating according to the heating profile based on receiving this information.

Next, the controller 260 sets, for each puff timing, the temperature corresponding to the graduation mark at the center of the axis 32 and resolution, based on the adjustment pattern of the target temperature in the previous customization operation (step S104). At this time, the controller 260 sets the temperature corresponding to the graduation mark at the center of the axis 32 to the target temperature that has been set for the previous customization operation. The controller 260 sets the resolution based on the amount of change in the target temperature in the previous customization operation. The temperature corresponding to the graduation mark at the center of the axis 32 and/or the resolution may vary among the puff timings.

Next, the controller 260 displays the customization screen 30 to receive a user operation to move the point 31 on the axis 32 corresponding to each puff timing (step S106). The controller 260 may display the customization screen 30 during the heating session and control the outputter 220 to display a screen that prompts the user to perform puffing each time the puff timing arrives and also display a screen that prompts the user to move the point 31 to match the smoke taste.

Next, the controller 260 changes the target temperature for each puff timing based on the position of the point 31 on the axis 32 corresponding to the puff timing (step S108). In an example, when the point 31 is moved up from the graduation mark at the center of the axis 32, the controller 260 sets the target temperature to a temperature obtained by adding a specific temperature to the target temperature that has been set for the previous customization operation. The specific temperature is obtained by multiplying the resolution by the number of graduation marks over which the point 31 has been moved. In another example, when the point 31 is moved down from the graduation mark at the center of the axis 32, the controller 260 sets the target temperature to a temperature obtained by subtracting a specific temperature from the target temperature that has been set for the previous customization operation. The specific temperature is obtained by multiplying the resolution by the number of graduation marks over which the point 31 has been moved. In still another example, when the position of the point 31 remains at the graduation mark at the center of the axis 32, the controller 260 maintains the target temperature that has been set for the previous customization operation.

Subsequently, the controller 260 controls the communicator 240 to transmit the modified heating profile to the inhaler device 100 (step S110). Consequently, the inhaler device 100 performs heating according to the modified heating profile during the subsequent puff timing, and this approach continues for all following puff timings. The operations in steps S102 to S110 described above correspond to the customization operation.

Next, the controller 260 determines whether an end condition has been satisfied (step S112). An exemplary end condition is that the user provides an instruction to end the customization operation. Another exemplary end condition is that the point 31 is not moved from the graduation mark at the center of the axis 32 for all puff timings. This process allows the user to create a heating profile that achieves the desired smoke taste by repeatedly performing the customization operation until the adjustment of the target temperature concludes.

<3. Supplement>

A preferred embodiment of the present invention has been described in detail with reference to the accompanying drawings, but the present invention is not limited to this example. It is understood that various modifications and alterations within the scope of the technical idea indicated in the appended claims may occur to those skilled in the art and are also embraced within the technical scope of the present invention.

The discussion of the embodiment has described an example in which the adjustment of the target temperature for the first puff timing is prohibited. The smoke taste in the first puff timing may be changed using other methods. For example, the terminal device 200 may change the duration until the first puff timing. Specifically, when the position of the point 31-1 on the axis 32-1 corresponding to the first puff timing is raised, the terminal device 200 may extend the duration until the first puff timing. In this case, the smoke taste can be intensified, similar to when the target temperature is increased. When the position of the point 31-1 on the axis 32-1 corresponding to the first puff timing is lowered, the terminal device 200 may shorten the duration until the first puff timing. In this case, the smoke taste can be weakened, similar to when the target temperature is decreased.

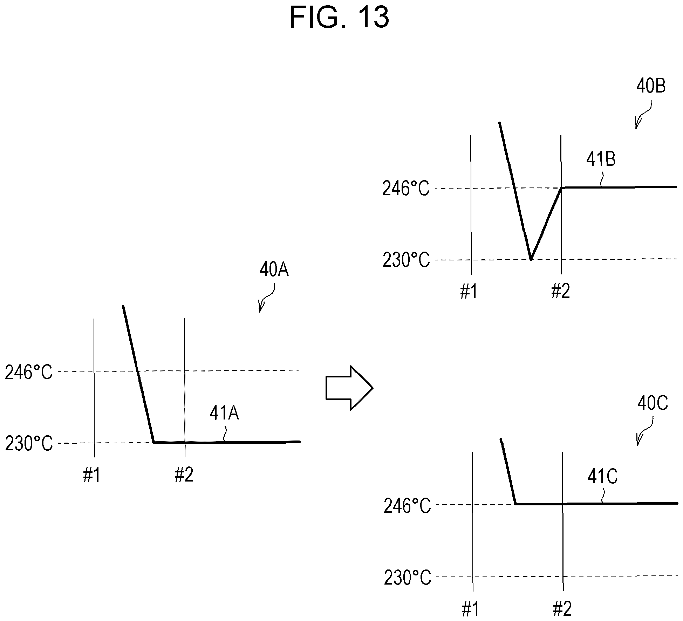

It is desirable that the target temperature for the second puff timing is used as the temperature (hereinafter also referred to as the heating restart temperature) at which the heating state changes from OFF to ON. This feature will be detailed with reference to Fig. 13. Fig. 13 illustrates the target temperature for the second puff timing. In this drawing, the target temperature for the second puff timing changes from 230°C to 246°C. A graph 40A illustrates a heating profile before modification. A line 41A plots time-series changes in the target temperature. A graph 40B illustrates a heating profile when the target temperature is changed to 246°C, while the heating restart temperature remains at 230°C. A line 41B plots time-series changes in the target temperature. A graph 40C illustrates a heating profile when the target temperature and the heating restart temperature are changed to 246°C. A line 41C plots time-series changes in the target temperature. As illustrated in the graph 40B, when the heating restart temperature remains at 230°C, the temperature of the heater 121 initially decreases to 230°C and then increases to 246°C. This method results in a relatively small improvement in the smoke taste at the second puff timing. By contrast, as illustrated in graph 40C, when the heating restart temperature is changed to 246°C, the temperature of the heater 121 remains at a lower limit of 246°C. This method significantly improves the smoke taste at the second puff timing.

The discussion of the embodiment has described an example in which the temperature corresponding to the graduation mark at the center of the axis 32 is set to the target temperature that has been set for the previous customization operation. However, the present invention is not limited to this example. The terminal device 200 set the first value for the subsequent customization operation to a value different from the target temperature that has been set for the previous customization operation. For example, the terminal device 200 sets the first value for a specific puff timing to the average value of the target temperature that has been set for the previous puff timing corresponding to the previous customization operation and the target temperatures that has been set for the puff timings before and after the previous puff timing.

The discussion of the embodiment has described an example in which graduation marks are set on the axis 32, as illustrated in Figs. 6 to 10, and the target temperature can be designated from discrete values. However, the present invention is not limited to this example. The target temperature may be designated from continuous values. This implies that the point 31 may also be movable to positions between the graduation marks on the axis 32.

The discussion of the embodiment has described an example in which the portions corresponding to the temperatures above the upper limit temperature or below the lower limit temperature that can be set as the target temperature are indicated by dashed lines in the axis 32, with reference to Figs. 8 and 10. However, the present invention is not limited to this example. It is sufficient for the terminal device 200 to display on the customization screen 30 the specific portion of the axis 32 corresponding to the temperatures that cannot be set as the target temperature in a different manner from the specific portion of the axis 32 corresponding to temperatures that can be set as the target temperature. The differences in display methods are not limited to variations between solid and dashed lines. The terminal device 200 may display variations in factors such as color, thickness, or shade.

The discussion of the embodiment has described an example in which the heater 121 is implemented as a thermal resistor, designed to generate heat through electrical resistance. However, the present invention is not limited to this example. For example, the heater 121 may include an electromagnetic induction source such as a coil that generates magnetic fields and a susceptor that generates heat through induction heating. The susceptor may consequently heat the stick substrate 150. In this case, the controller 116 controls the electromagnetic induction source to generate alternating magnetic fields by applying an alternating current, thereby causing the susceptor to generate heat in response to the alternating magnetic fields affecting the susceptor. In this case, the temperature at which the aerosol source controlled according to the heating profile is heated is equal to the temperature of the susceptor. The temperature of the susceptor can be estimated based on the electrical resistance of the electromagnetic induction source.

The discussion of the embodiment has described an example in which the target temperature of the heater 121 corresponds to the parameters related to the temperature used to heat the aerosol source, which is specified in the heating profile. However, the present invention is not limited to this example. Examples of the parameters related to the temperature used to heat the aerosol source include the electrical resistance of the heater 121, as well as the temperature of the heater 121 described in the embodiment. When the inhaler device 100 includes an electromagnetic induction source in place of the heater 121, examples of the parameters related to the temperature used to heat the aerosol source, specified in the heating profile, include the target value of the temperature of the susceptor and the target value of the electrical resistance of the electromagnetic induction source.

The discussion of the embodiment has described an example in which the inhaler device 100 heats the stick substrate 150 to generate an aerosol. However, the present invention is not limited to this example. The inhaler device 100 may be configured as a liquid atomization aerosol generator designed to generate aerosols by heating and atomizing the aerosol source that is a liquid. The present invention may be applied to liquid atomization aerosol generators.

The devices described in the present specification may each be implemented as a single device, or some or all of the portions of the device may be implemented separately as discrete devices. For example, the controller 260 in the terminal device 200 may be provided in a device such as a server connected to the terminal device 200 through networks or other connection interfaces. This implies that customization of the heating profile may be performed on a cloud-based server, based on user operations inputted to the terminal device 200.

The series of operations performed by the device described in this specification may be implemented by software, hardware, or a combination of software and hardware. A program configured as software is prestored, for example, inside the device or in an external storage medium (specifically, computer-readable non-transitory medium). For example, when a computer for controlling the device described in this specification runs the program, the program is loaded on a RAM and executed by a processing circuit such as a CPU. The storage medium may be, for example, a magnetic disk, optical disk, magneto-optical disk, or flash memory. Instead of using the storage medium, the computer program described above may be, for example, delivered through networks. The computer may be, for example, a special-purpose integrated circuit such as an application-specific integrated circuit (ASIC), a general-purpose processor designed to implement functions by loading a software program, or a computer on a server used for cloud computing. The series of operations performed by the devices described in the present specification may be performed separately by multiple computers.

The operations described using a flowchart and sequence diagrams in this specification are not necessarily performed in the order illustrated. Some of the operational steps may be parallelly performed. Alternatively, additional operational steps may be used, or some operational steps may be removed.

The following configurational features are also encompassed within the technical scope of the present invention.

(1) An information processing device comprising:

a controller configured to control a customization operation including
generating a display image that displays an operational object, the operational object being configured to set a parameter related to a temperature to which an aerosol source contained in a substrate is to be heated, the parameter being specified and included in control information, the parameter being configured to be used by an inhaler device that generates an aerosol by heating the aerosol source in accordance with the control information, and
changing the parameter included in control information, based on a user operation performed with the operational object displayed in the generated display image, wherein
the controller is configured to, when repeatedly performing the customization operation, set a method for changing the parameter for the customization operation to be subsequently performed, based on an adjustment pattern of the parameter in the customization operation previously performed.

(2) The information processing device according to (1), wherein

the display image includes an axis on which the operational object is movably positioned, and
the controller is configured to
change the parameter based on a position of the operational object on the axis during the customization operation, and set a correspondence relation for the customization operation to be subsequently performed between the position on the axis and a value to be set as the parameter when the operational object is located at the position, based on the adjustment pattern of the parameter in the customization operation previously performed.

(3) The information processing device according to (2), wherein

the controller is configured to
during the customization operation, set the parameter to a specific value obtained by adding or subtracting a second value that corresponds to a difference between a reference position on the axis and the position of the operational object to or from a first value that corresponds to the reference position, and
set the first value for the customization operation to be subsequently performed, based on the parameter that is set for the customization operation previously performed.

(4) The information processing device according to (3), wherein
the controller is configured to set the first value for the customization operation to be subsequently performed to the parameter that is set for the customization operation previously performed.

(5) The information processing device according to any one of (2) to (4), wherein

the controller is configured to
during the customization operation, set the parameter to a specific value obtained by adding or subtracting a second value that corresponds to a distance between a reference position on the axis and the position of the operational object to or from a first value that corresponds to the reference position, and
set the second value per unit distance for the customization operation to be subsequently performed, based on a change amount of the parameter in the customization operation previously performed.

(6) The information processing device according to (5), wherein

the controller is configured to increase the second value per unit distance for the customization operation to be subsequently performed as the change amount of the parameter in the customization operation previously performed increases, and to decrease the second value per unit distance for the customization operation to be subsequently performed as the change amount of the parameter during the customization operation previously performed decreases.

(7) The information processing device according to (5) or (6), wherein
the controller is configured to set the second value per unit distance for the customization operation to be subsequently performed such that an integer multiple of the second value per unit distance for the customization operation to be subsequently performed matches the change amount of the parameter in the customization operation previously performed.

(8) The information processing device according to any one of (3) to (7), wherein
an initial position of the operational object in the display image is the reference position on the axis.

(9) The information processing device according to (8), wherein
the reference position is a center of the axis.

(10) The information processing device according to any one of (2) to (9), wherein

the axis is one of a plurality of axes that are included in the display image and each provided with the operational object movably positioned, and the plurality of axes respectively correspond to a plurality of puff timings, and
the controller is configured to set the parameter for each puff timing based on the position of the operational object on each axis.

(11) The information processing device according to any one of (2) to (10), wherein
the controller is configured to display a portion of the axis corresponding to a value to be set as the parameter in a differ manner from a portion of the axis corresponding to a value not to be set as the parameter in the display image.

(12) An information processing method comprising:

controlling a customization operation including generating a display image that displays an operational object, the operational object being configured to set a parameter related to a temperature to which an aerosol source contained in a substrate is to be heated, the parameter being specified and included in control information, the parameter being configured to be used by an inhaler device that generates an aerosol by heating the aerosol source in accordance with the control information, and
changing the parameter included in control information, based on a user operation performed with the operational object displayed in the generated display image, wherein
The controlling the customization operation includes, when repeatedly performing the customization operation, setting a method for changing the parameter for the customization operation to be subsequently performed, based on an adjustment pattern of the parameter in the customization operation previously performed.

(13) A program configured to cause a computer to operate as a controller that controls a customization operation including generating a display image that displays an operational object, the operational object being configured to set a parameter related to a temperature to which an aerosol source contained in a substrate is to be heated, the parameter being specified and included in control information, the parameter being configured to be used by an inhaler device that generates an aerosol by heating the aerosol source in accordance with the control information, and

changing the parameter included in control information, based on a user operation performed with the operational object displayed in the generated display image, wherein
The controller is configured to, when repeatedly performing the customization operation, set a method for changing the parameter for the customization operation to be subsequently performed, based on an adjustment pattern of the parameter in the customization operation previously performed.

Reference Signs List

| 1 | system |
|---|---|
| 100 | inhaler device |
| 111 | power supply |
| 112 | sensor |
| 113 | notifier |
| 114 | memory |
| 115 | communicator |
| 116 | controller |
| 121 | heater |
| 140 | holder |
| 141 | internal space |
| 142 | opening |
| 143 | bottom |
| 144 | heat insulator |
| 150 | stick substrate |
| 151 | substrate |

152    inhalation port
200    terminal device
210    inputter
220    outputter
230    detector
240    communicator
250    memory
260    controller
30     customization screen
31     point
32     axis

**Claims**

1.   An information processing device comprising:

a controller configured to control a customization operation including
generating a display image that displays an operational object, the operational object being configured to set a parameter related to a temperature to which an aerosol source contained in a substrate is to be heated, the parameter being specified and included in control information, the parameter being configured to be used by an inhaler device that generates an aerosol by heating the aerosol source in accordance with the control information, and
changing the parameter included in control information, based on a user operation performed with the operational object displayed in the generated display image, wherein
the controller is configured to, when repeatedly performing the customization operation, set a method for changing the parameter for the customization operation to be subsequently performed, based on an adjustment pattern of the parameter in the customization operation previously performed.

2.   The information processing device according to claim 1, wherein

the display image includes an axis on which the operational object is movably positioned, and
the controller is configured to
change the parameter based on a position of the operational object on the axis during the customization operation, and set a correspondence relation for the customization operation to be subsequently performed between the position on the axis and a value to be set as the parameter when the operational object is located at the position, based on the adjustment pattern of the parameter in the customization operation previously performed.

3.   The information processing device according to claim 2, wherein

the controller is configured to
during the customization operation, set the parameter to a specific value obtained by adding or subtracting a second value that corresponds to a difference between a reference position on the axis and the position of the operational object to or from a first value that corresponds to the reference position, and
set the first value for the customization operation to be subsequently performed, based on the parameter that is set for the customization operation previously performed.

4.   The information processing device according to claim 3, wherein
the controller is configured to set the first value for the customization operation to be subsequently performed to the parameter that is set for the customization operation previously performed.

5.   The information processing device according to any one of claims 2 to 4, wherein

the controller is configured to
during the customization operation, set the parameter to a specific value obtained by adding or subtracting a second value that corresponds to a distance between a reference position on the axis and the position of the operational object to or from a first value that corresponds to the reference position, and
set the second value per unit distance for the customization operation to be subsequently performed, based on a change amount of the parameter in the customization operation previously performed.

6.   The information processing device according to claim 5, wherein
the controller is configured to increase the second value per unit distance for the customization operation to be subsequently performed as the change amount of the parameter in the customization operation previously performed increases, and to decrease the second value per unit distance for the customization operation to be subsequently performed as the change amount of the parameter during the customization operation previously performed decreases.

7.   The information processing device according to claim 5 or 6, wherein
the controller is configured to set the second value per unit distance for the customization operation to be subsequently performed such that an integer multiple of the second value per unit distance for the customization operation to be subsequently performed matches the change amount of the parameter in the customization operation previously performed.

8. The information processing device according to any one of claims 3 to 7, wherein
an initial position of the operational object in the display image is the reference position on the axis.

9. The information processing device according to claim 8, wherein
the reference position is a center of the axis.

10. The information processing device according to any one of claims 2 to 9, wherein

the axis is one of a plurality of axes that are included in the display image and each provided with the operational object movably positioned, and the plurality of axes respectively correspond to a plurality of puff timings, and
the controller is configured to set the parameter for each puff timing based on the position of the operational object on each axis.

11. The information processing device according to any one of claims 2 to 10, wherein
the controller is configured to display a portion of the axis corresponding to a value to be set as the parameter in a differ manner from a portion of the axis corresponding to a value not to be set as the parameter in the display image.

12. An information processing method comprising:

controlling a customization operation including generating a display image that displays an operational object, the operational object being configured to set a parameter related to a temperature to which an aerosol source contained in a substrate is to be heated, the parameter being specified and included in control information, the parameter being configured to be used by an inhaler device that generates an aerosol by heating the aerosol source in accordance with the control information, and
changing the parameter included in control information, based on a user operation performed with the operational object displayed in the generated display image, wherein
the controlling the customization operation includes, when repeatedly performing the customization operation, setting a method for changing the parameter for the customization operation to be subsequently performed, based on an adjustment pattern of the parameter in the customization operation previously performed.

13. A program configured to cause a computer to operate as a controller that controls a customization operation including generating a display image that displays an operational object, the operational object being configured to set a parameter related to a temperature to which an aerosol source contained in a substrate is to be heated, the parameter being specified and included in control information, the parameter being configured to be used by an inhaler device that generates an aerosol by heating the aerosol source in accordance with the control information, and

changing the parameter included in control information, based on a user operation performed with the operational object displayed in the generated display image, wherein
the controller is configured to, when repeatedly performing the customization operation, set a method for changing the parameter for the customization operation to be subsequently performed, based on an adjustment pattern of the parameter in the customization operation previously performed.

# FIG. 1

# FIG. 2

# FIG. 3

200

TERMINAL DEVICE

210

INPUTTER

220

OUTPUTTER

230

DETECTOR

240

COMMUNICATOR

250

MEMORY

260

CONTROLLER

# FIG. 4

EP 4 458 193 A1

FIG. 5

30

32-1 32-2 32-3 32-4 32-5 32-6 32-7 32-8 32-9 32-10 32-11 32-12 32-13 32-14 32-15

31-1 31-2 31-3 31-4 31-5 31-6 31-7 31-8 31-9 31-10 31-11 31-12 31-13 31-14 31-15

#1 #2 #3 #4 #5 #6 #7 #8 #9 #10 #11 #12 #13 #14 #15

FIG. 6

$T_{n-1}+3\Delta T$

$T_{n-1}+2\Delta T$ — $\Delta T$

$T_{n-1}+\Delta T$ — $\Delta T$

$T_{n-1}$ ◆ — $\Delta T$

$T_{n-1}-\Delta T$ — $\Delta T$

$T_{n-1}-2\Delta T(=T_{n-2})$ — $\Delta T$

$T_{n-1}-3\Delta T$ — $\Delta T$

FIG. 7

$T_{n-1}+3\Delta T$

$T_{n-1}+2\Delta T(=T_{n-2})$ — $\Delta T$

$T_{n-1}+\Delta T$ — $\Delta T$

$T_{n-1}$ ◆ — $\Delta T$

$T_{n-1}-\Delta T$ — $\Delta T$

$T_{n-1}-2\Delta T$ — $\Delta T$

$T_{n-1}-3\Delta T$ — $\Delta T$

# FIG. 8

EP 4 458 193 A1

# FIG. 9

| FIRST | SECOND | THIRD | FOURTH |
|-------|--------|-------|--------|
| $\Delta T = 16°C$ | $\Delta T = 8°C$ | $\Delta T = 8°C$ | $\Delta T = 4°C$ |

**FIRST** ($\Delta T = 16°C$)

- 31
- 246°C — 31
- 32
- 230°C ($T_0$)
- 214°C

**SECOND** ($\Delta T = 8°C$)

- 270°C
- 262°C — 31
- 32
- 254°C
- 246°C ($T_1$)
- 238°C
- 230°C ($T_0$)
- 222°C

**THIRD** ($\Delta T = 8°C$)

- 286°C
- 278°C
- 270°C
- 262°C ($T_2$)
- 254°C — 31
- 32
- 246°C ($T_1$)
- 238°C

**FOURTH** ($\Delta T = 4°C$)

- 266°C
- 262°C ($T_2$)
- 258°C — 31
- 254°C ($T_3$) — 32
- 250°C
- 246°C
- 242°C

EP 4 458 193 A1

# FIG. 10

FIRST
$\Delta T = 16°C$

SECOND
$\Delta T = 8°C$

THIRD
$\Delta T = 12°C$

FOURTH
$\Delta T = 12°C$

EP 4 458 193 A1

# FIG. 11

| FIRST | SECOND | THIRD | FOURTH |
|---|---|---|---|
| $\Delta T = 16°C$ | $\Delta T = 8°C$ | $\Delta T = 4°C$ | $\Delta T = 2°C$ |

EP 4 458 193 A1

# FIG. 12

START

DETECT HEATING ACCORDING TO HEATING PROFILE — S102

SET, FOR EACH PUFF TIMING, TEMPERATURE CORRESPONDING TO GRADUATION MARK AT CENTER OF AXIS AND RESOLUTION, BASED ON ADJUSTMENT PATTERN OF TARGET TEMPERATURE IN PREVIOUS CUSTOMIZATION OPERATION — S104

DISPLAY CUSTOMIZATION SCREEN TO RECEIVE USER OPERATION TO MOVE POINT ON AXIS CORRESPONDING TO EACH PUFF TIMING — S106

CHANGE TARGET TEMPERATURE FOR EACH PUFF TIMING BASED ON POSITION OF POINT ON AXIS CORRESPONDING TO PUFF TIMING — S108

TRANSMIT MODIFIED HEATING PROFILE TO INHALER DEVICE — S110

END CONDITION HAS BEEN SATISFIED? — S112

NO

YES

END

# FIG. 13

40B

41B

246°C

230°C

#1        #2

40A

246°C

230°C

41A

#1        #2

40C

246°C

41C

230°C

#1        #2

## INTERNATIONAL SEARCH REPORT

International application No.

**PCT/JP2022/013534**

### A.    CLASSIFICATION OF SUBJECT MATTER

*A24F 40/57*(2020.01)i; *A24F 40/60*(2020.01)i
FI:   A24F40/57; A24F40/60

According to International Patent Classification (IPC) or to both national classification and IPC

### B.    FIELDS SEARCHED

Minimum documentation searched (classification system followed by classification symbols)

A24F40/57; A24F40/60

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

### C.    DOCUMENTS CONSIDERED TO BE RELEVANT

| Category* | Citation of document, with indication, where appropriate, of the relevant passages | Relevant to claim No. |
|---|---|---|
| Y | WO 2019/104227 A1 (JUUL LABS, INC.) 31 May 2019 (2019-05-31) paragraphs [0048]-[0087], [0196], [0228], fig. 1-3, 13 | 1, 12-13 |
| A | | 2-11 |
| Y | JP 09-017562 A (MATSUSHITA ELECTRIC IND CO LTD) 17 January 1997 (1997-01-17) paragraph [0018], fig. 7 | 1, 12-13 |
| Y | JP 2020-009559 A (MITSUBISHI ELECTRIC CORP) 16 January 2020 (2020-01-16) paragraphs [0029]-[0031], fig. 16 | 1, 12-13 |

☐ Further documents are listed in the continuation of Box C.       ☑ See patent family annex.

| | |
|---|---|
| \*    Special categories of cited documents:<br>"A"   document defining the general state of the art which is not considered to be of particular relevance<br>"E"   earlier application or patent but published on or after the international filing date<br>"L"   document which may throw doubts on priority claim(s) or which is cited to establish the publication date of another citation or other special reason (as specified)<br>"O"   document referring to an oral disclosure, use, exhibition or other means<br>"P"   document published prior to the international filing date but later than the priority date claimed | "T"   later document published after the international filing date or priority date and not in conflict with the application but cited to understand the principle or theory underlying the invention<br>"X"   document of particular relevance; the claimed invention cannot be considered novel or cannot be considered to involve an inventive step when the document is taken alone<br>"Y"   document of particular relevance; the claimed invention cannot be considered to involve an inventive step when the document is combined with one or more other such documents, such combination being obvious to a person skilled in the art<br>"&"   document member of the same patent family |

| Date of the actual completion of the international search | Date of mailing of the international search report |
|---|---|
| **26 May 2022** | **07 June 2022** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

INTERNATIONAL SEARCH REPORT
Information on patent family members

International application No.

**PCT/JP2022/013534**

| Patent document cited in search report | | | Publication date (day/month/year) | Patent family member(s) | | | Publication date (day/month/year) |
|---|---|---|---|---|---|---|---|
| WO | 2019/104227 | A1 | 31 May 2019 | US | 2020/0352249 | A1 | |
| | | | | EP | 3713627 | A1 | |
| | | | | CN | 112512612 | A | |
| JP | 09-017562 | A | 17 January 1997 | (Family: none) | | | |
| JP | 2020-009559 | A | 16 January 2020 | (Family: none) | | | |

Form PCT/ISA/210 (patent family annex) (January 2015)

31

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2019104227 A1